# EUROPEAN PATENT APPLICATION

(11) **EP 4 622 015 A1**
(43) Date of publication of application: **24.09.2025**
(21) Application number: 22965808.3
(22) Date of filing: 16.11.2022
(51) Int. Cl.: H01R 13/533, G01F 1/684, H01R 4/04

(54) **ELECTRICAL CIRCUIT DEVICE**

(71) Applicant: Astemo, Ltd., Tokyo 100-0004 (JP)
(72) Inventor: SAITO, Tomoaki, Hitachinaka-shi, Ibaraki 312-8503 (JP); SAITO, Naoki, Hitachinaka-shi, Ibaraki 312-8503 (JP)
(74) Representative: MERH-IP Matias Erny Reichl Hoffmann Patentanwälte PartG mbB
(86) International application number: PCT/JP2022/042630
(87) International publication number: WO 2024/105832

(57) **Abstract**

An object of the present invention is to obtain an electrical circuit device capable of reducing thermal stress acting on an interface between a conductor piece and a sealing material and suppressing peeling of the sealing material from a housing. A physical quantity measurement device 20 constituting an electrical circuit device includes a housing 201 in which a circuit chamber 235 is opened on a front surface 221, three or more conductor pieces 301 that are insert-molded in the housing 201 and has distal end portions 312a arranged to be exposed to the circuit chamber, a circuit board 207 accommodated in the circuit chamber, a wire material 303 that connects the three or more conductor pieces and the circuit board, and a sealing material 211 with which the circuit chamber is filled, in which, in the three or more conductor pieces, distal end portions 312a and 313a located in the middle have a smaller cross-sectional area than distal end portions 311a and 314a located at both ends in an arrangement direction.

## Description

### Technical Field

The present invention relates to an electrical circuit device such as a physical quantity detection device that detects a physical quantity of intake air taken into an internal combustion engine of a vehicle, for example.

### Background Art

PTL 1 discloses a configuration of an air flow rate measurement device in which a sensor assembly and a connector terminal are connected by a bonding wire and insert-molded in a resin housing.

### Citation List

### Patent Literature

PTL 1: JP 2014-219297 A

### Summary of Invention

### Technical Problem

The air flow rate measurement device in PTL 1 is provided in an intake passage of an engine for vehicle traveling, and is placed under a high-temperature environment in an engine room. Thus, thermal stress may act on the connector terminal. For example, when thermal stress is generated at the interface between the connector terminal made of metal and a sealing material made of epoxy resin and the thermal stress acts on the sealing material, stress may be applied to the bonding wire by peeling off from the housing, and disconnection may occur.

The present invention has been made in view of the above circumstances, and an object of the present invention is to provide an electrical circuit device capable of reducing thermal stress generated at an interface between a terminal and a sealing material and suppressing peeling of the sealing material from a housing.

### Solution to Problem

To solve the above problems, according to the present invention, an electrical circuit device includes a housing in which a circuit chamber is opened on a front surface, three or more conductor pieces that are insert-molded in the housing and has distal end portions arranged to be exposed to the circuit chamber, a circuit board accommodated in the circuit chamber, a wire material that connects the three or more conductor pieces and the circuit board, and a sealing material with which the circuit chamber is filled, in which, in the three or more conductor pieces, at least one distal end portion located in the middle has a smaller cross-sectional area than distal end portions located at both ends in an arrangement direction.

### Advantageous Effects of Invention

According to the present invention, it is possible to reduce the thermal stress at an interface between the conductor piece and the sealing material, the thermal stress acting on the sealing material, and to prevent peeling of the sealing material from the housing. Further features related to the present invention will become apparent from the description of the present specification and the accompanying drawings. Furthermore, problems, configurations, and effects other than those described above will be clarified by the following description of embodiments.

### Brief Description of Drawings

[FIG. 1] FIG. 1 is a system view of an electronic fuel injection type internal combustion engine control system 1 to which an electrical circuit device in the present invention is applied.
[FIG. 2] FIG. 2 is a front view of a physical quantity measurement device.
[FIG. 3] FIG. 3 is a view for describing an internal configuration of the physical quantity measurement device.
[FIG. 4] FIG. 4 is a view illustrating a state in which a connector terminal and a terminal block of a circuit board are connected by a wire material.
[FIG. 5] FIG. 5 is a cross-sectional view of a part of the physical quantity measurement device taken along the connector terminal.
[FIG. 6] FIG. 6 is a view illustrating a cross section of the connector terminal.
[FIG. 7] FIG. 7 is a view for describing a relationship between a shape of a side wall surface of a circuit chamber and a shape of the connector terminal.
[FIG. 8] FIG. 8 is a view for describing a shape of a throttle portion.
[FIG. 9] FIG. 9 is a view illustrating an injection direction of mold resin in injection molding.

### Description of Embodiments

Hereinafter, an embodiment of an electrical circuit device according to the present invention will be described with reference to the drawings.

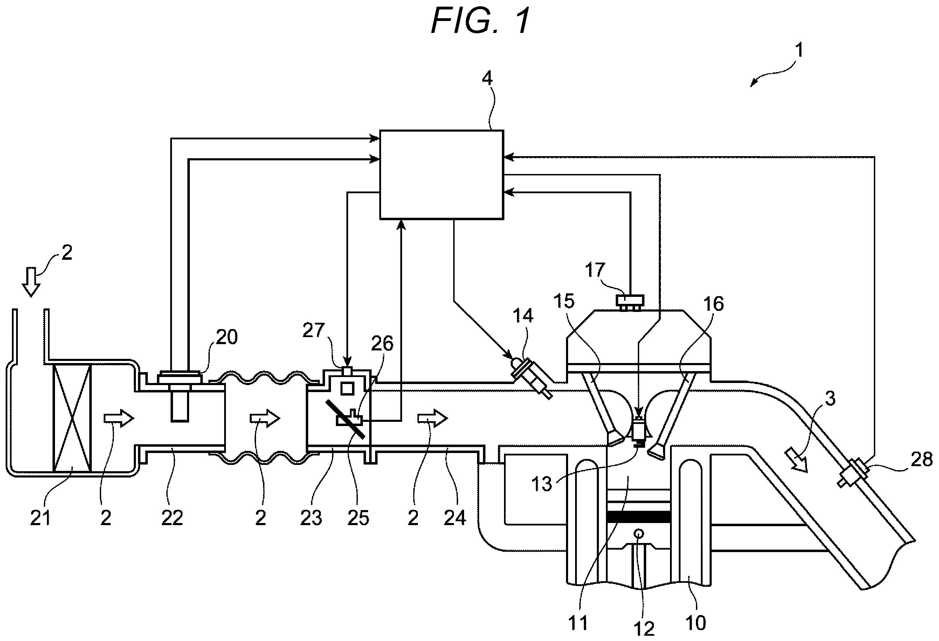

FIG. 1 is an overall view illustrating a configuration of an internal combustion engine system of a vehicle to which an electrical circuit device in the present invention is applied. In the present embodiment, a case where the electrical circuit device according to the present invention is a physical quantity measurement device that measures a physical quantity of intake air of an internal combustion engine control system 1 will be described.

In the internal combustion engine control system 1, intake air is taken in from an air cleaner 21 as a measurement target gas 2, based on an operation of an internal combustion engine 10 including an engine cylinder 11 and an engine piston 12. The intake air is guided to a combustion chamber of the engine cylinder 11 via an intake body being the main passage 22, a throttle body 23, and an intake manifold 24. The physical quantity of the measurement target gas 2 that is the intake air guided to the combustion chamber is measured by a physical quantity measurement device 20. Then, fuel is supplied from a fuel injection valve 14 based on the physical quantity measured by the physical quantity measurement device 20, and is guided to the combustion chamber in a state of an air-fuel mixture together with intake air.

The fuel injection valve 14 is provided in an intake port of the internal combustion engine 10. Fuel injected into the intake port is mixed with intake air, and an air-fuel mixture of the fuel and the intake air is guided to the combustion chamber via an intake valve 15 and burned to generate mechanical energy. The air-fuel mixture guided to the combustion chamber is in a state where fuel and air are mixed, and is explosively burned by spark ignition of an ignition plug 13 to generate mechanical energy. The gas after combustion is guided from an exhaust valve 16 to an exhaust pipe, and is discharged from the exhaust pipe to the outside of the vehicle as an exhaust gas 3.

The flow rate of the measurement target gas 2 that is the intake air guided to the combustion chamber is controlled by a throttle valve 25 having an opening degree that changes based on an operation of an accelerator pedal. In addition, the fuel supply amount is controlled based on the flow rate of the intake air guided to the combustion chamber. By controlling the opening degree of the throttle valve 25 to control the flow rate of the intake air guided to the combustion chamber, it is possible to control the mechanical energy generated by the internal combustion engine 10.

The physical quantity measurement device 20 measures physical quantities such as a flow rate, a temperature, humidity, and pressure of the measurement target gas 2 that is the intake air taken in through the air cleaner 21 and flows through the main passage 22. The physical quantity measurement device 20 outputs an electric signal corresponding to the physical quantity of the intake air. An output signal of the physical quantity measurement device 20 is input to a control device 4.

In addition, an output of a throttle angle sensor 26 that measures an opening degree of the throttle valve 25 is input to the control device 4, and further, an output of a rotation angle sensor 17 is input to the control device 4 in order to measure positions and states of the engine piston 12, the intake valve 15, and the exhaust valve 16 of the internal combustion engine 10, and a rotation speed of the internal combustion engine 10. In order to measure the state of the mixing ratio of the fuel amount and the air amount from the state of the exhaust gas 3, an output of an oxygen sensor 28 is input to the control device 4.

The control device 4 calculates the fuel injection amount and the ignition timing based on the physical quantity of the intake air that is the output of the physical quantity measurement device 20 and the rotation speed of the internal combustion engine 10 measured based on the output of the rotation angle sensor 17. The fuel amount supplied from the fuel injection valve 14 and the ignition timing ignited by the ignition plug 13 are controlled based on these calculation results. The fuel supply amount and the ignition timing are actually finely controlled based on the temperature measured by the physical quantity measurement device 20, the change state of a throttle angle, the change state of the engine rotation speed, and the state of the air-fuel ratio measured by the oxygen sensor 28. The control device 4 further controls the air amount bypassing the throttle valve 25 by an idle air control valve 27 in an idle operation state of the internal combustion engine 10, and controls the rotation speed of the internal combustion engine 10 in the idle operation state.

Both the fuel supply amount and the ignition timing, which are main control amounts of the internal combustion engine 10, are calculated using the output of the physical quantity measurement device 20 as a main parameter. Thus, it is important to improve the measurement accuracy of the physical quantity measurement device 20, suppress the change with time, and improve the reliability for improving the control accuracy of the vehicle and securing the reliability. In particular, in recent years, demands for fuel saving of vehicles are very high, and demands for exhaust gas purification are very high. In order to meet these demands, it is very important to improve the measurement accuracy of the physical quantity of the intake air that is the measurement target gas 2, which is measured by the physical quantity measurement device 20. It is also important that the physical quantity measurement device 20 maintains high reliability.

The vehicle on which the physical quantity measurement device 20 is mounted is used in an environment where the temperature and humidity change largely. It is desirable that the physical quantity measurement device 20 consider a response to a change in temperature or humidity in the use environment and a response to dust, contaminants, and the like. In addition, the physical quantity measurement device 20 is mounted on an intake pipe influenced by heat generated from the internal combustion engine 10. Therefore, the heat generated by the internal combustion engine 10 is transmitted to the physical quantity measurement device 20 through the intake pipe that is the main passage 22. Since the physical quantity measurement device 20 measures the flow rate of the measurement target gas by performing heat transfer with the measurement target gas, it is important to suppress the influence of heat from the outside as much as possible.

As described below, the physical quantity measurement device 20 mounted on the vehicle not only solves the problem described in the section of the technical problem, but also exhibits the effect described in the section of the advantageous effects of the invention. As described below, the physical quantity measurement device 20 solves various problems required as a product in sufficient consideration of the various problems described above, and exhibits various effects. Specific problems to be solved and specific effects to be obtained by the physical quantity measurement device 20 will be described in the following description of the embodiment.

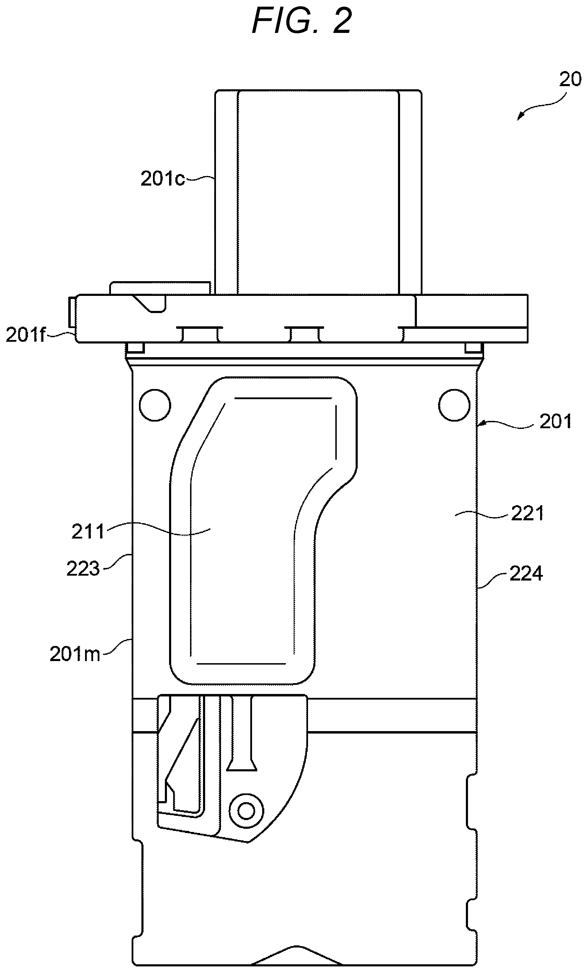

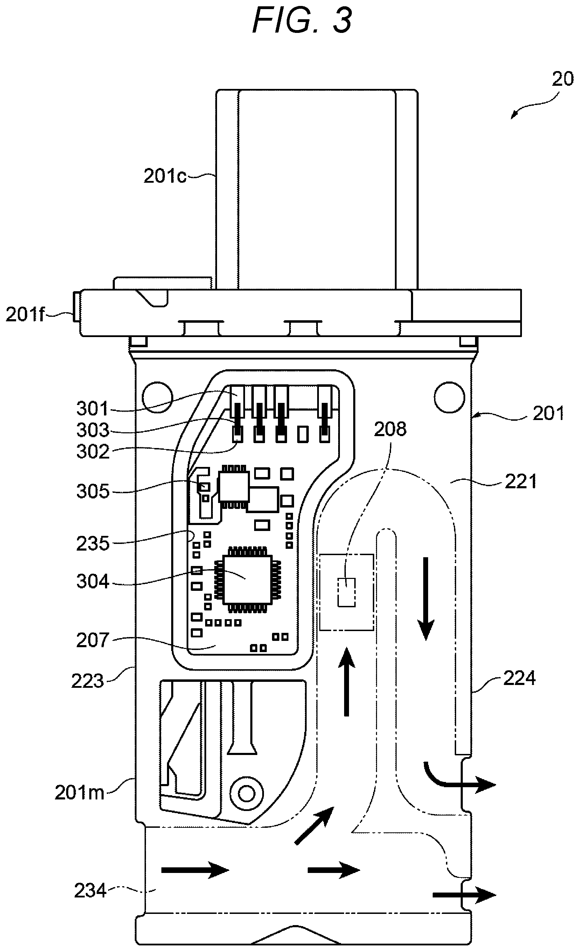

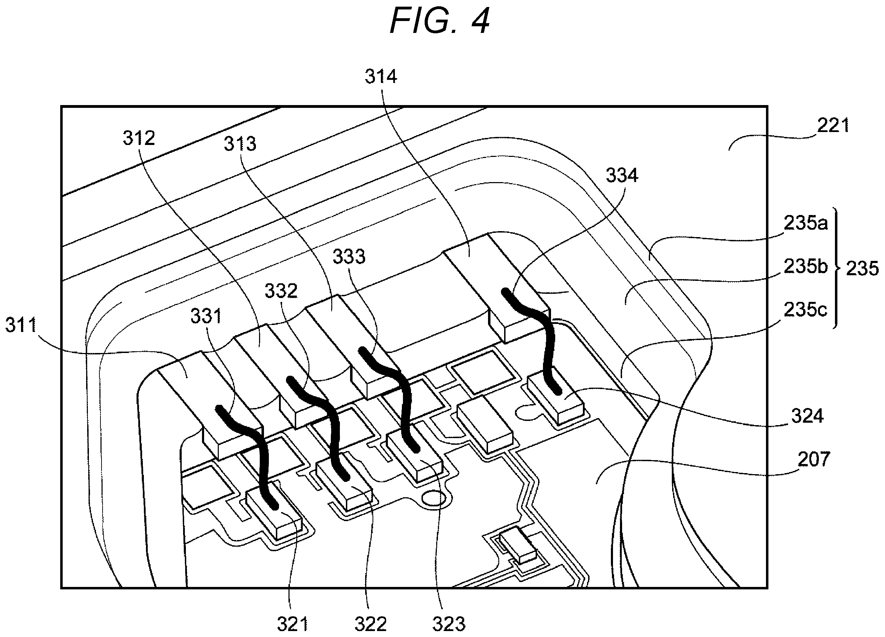

FIG. 2 is a front view of the physical quantity measurement device used in the internal combustion engine control system illustrated in FIG. 1. FIG. 3 is a front view of a state in which a sealing material that seals a circuit chamber of the physical quantity measurement device illustrated in FIG. 2 is not illustrated, and a sub-passage is indicated by a virtual line. FIG. 4 is a view illustrating a state in which a connector terminal and a terminal block of a circuit board are connected by a wire material.

The physical quantity measurement device 20 is used by being inserted into the main passage 22 from a mounting hole provided in a passage wall of the main passage 22. The physical quantity measurement device 20 includes a housing 201. The housing 201 is formed by injection-molding a synthetic resin material made of polymer resin such as insulating polybutylene terephthalate (PBT) or polypropylene (PP), and a connector terminal 301 made of metal is insert-molded.

The housing 201 includes a flange 201f fixed to the intake body that is the main passage 22, a connector 201c that protrudes from the flange 201f and is exposed to the outside from the intake body for electrical connection with an external device, and a measuring portion 201m extending to protrude from the flange 201f toward the center of the main passage 22.

The flange 201f has a substantially rectangular shape in plan view having a predetermined plate thickness, and has a through hole at a corner. The flange 201f is fixed to the main passage 22 by inserting a fixing screw into the through hole at the corner and screwing the fixing screw into a screw hole of the main passage 22.

The connector 201c includes the connector terminal 301 that has one end side electrically connected to the circuit board and the other end side electrically connected to the outside. The connector terminal 301 is formed by a plurality of plate-shaped conductors, and is insert-molded in the housing 201.

The connector terminal 301 includes an output terminal for outputting the physical quantity such as the flow rate or the temperature that is a measurement result of the physical quantity measurement device 20, a power supply terminal for supplying DC power for operating the physical quantity measurement device 20, and a correction terminal used to perform measurement of the physical quantity measurement device 20 produced, obtain a correction value related to each physical quantity measurement device 20, and store the correction value in a memory inside the physical quantity measurement device 20.

The measuring portion 201m has a thin and long shape extending from the flange 201f in the center direction of the main passage 22, and has a wide front surface 221, a wide back surface, and a pair of narrow side wall surfaces 223 and 224. The measuring portion 201m is inserted into the inside from, for example, a mounting hole provided in the main passage 22, and is fixed to the main passage 22 via the flange 201f by bringing the flange 201f into contact with the main passage 22 and fixing the flange 201f to the main passage 22 with a screw. The measuring portion 201m is disposed in the main passage 22 such that the side wall surface 223 faces the upstream side in the flow direction of the measurement target gas in the main passage 22, and the side wall surface 224 faces the downstream side in the flow direction of the measurement target gas.

The measuring portion 201m is provided with a sub-passage 234 and a circuit chamber 235. The circuit chamber 235 is disposed at a position on the upstream side in the flow direction of the measurement target gas 2 in the main passage 22, and the sub-passage 234 is disposed at a position on the downstream side in the flow direction of the measurement target gas 2 in the main passage 22 with respect to the circuit chamber 235.

A circuit board 207 is accommodated in the circuit chamber 235. The circuit chamber 235 is opened to the front surface 221 of the measuring portion 201m, and a part of the circuit board 207 and the distal end portions 311 to 314 of the connector terminals 301 are exposed toward the front surface of the housing. The circuit board 207 is formed by, for example, a glass epoxy substrate, but may be a substrate using another material, or may be a metal conduction portion such as a terminal terminal or a lead frame without being limited to the substrate. The circuit board 207 has a substantially rectangular shape extending along the longitudinal direction of the measuring portion 201m, and a circuit component 304 such as an IC or an LSI, a chip component 305 such as a chip capacitor or a chip resistor, and a terminal block 302 are mounted on the surface thereof.

The terminal block 302 is disposed at a position adjacent to the connector terminal 301 in the circuit chamber 235, and is exposed toward the front surface of the housing in the circuit chamber 235. The terminal block 302 is connected to the distal end portions 311 to 314 of the connector terminals 301 by wire bonding or terminal welding. In the present embodiment, as illustrated in FIG. 4, the terminal block 302 includes bonding pads 321 to 324 made of aluminum.

As illustrated in FIG. 4, the circuit board 207 is electrically connected to the connector terminals 311 to 314 by performing wire bonding (bonding connection) in which ultrasonic bonding is performed between the bonding pads 321 to 324 and the connector terminals 311 to 314 by using a wire material 303 such as bonding wires 331 to 334 made of aluminum. After wire bonding, the circuit chamber 235 is sealed by filling with a sealing material 211 as illustrated in FIG. 2. The sealing material 211 is a thermosetting adhesive that is liquid at the time of injection and solidifies by heating, and in the present embodiment, an epoxy adhesive is used. The epoxy adhesive is a two-liquid adhesive, but may be a one-liquid adhesive.

As illustrated in FIG. 3, the sub-passage 234 has a shape in which one end opens to the side wall surface 223 of the measuring portion 201m, the sub-passage 234 is branched in the middle, one branched piece extends linearly as it is and opens to the side wall surface 224 on the opposite side of the measuring portion 201m, and the other piece extends linearly toward the flange 201f of the measuring portion 201m, is bent toward the side wall surface 224 and turns U toward the distal end of the measuring portion 201m, and opens to the side wall surface 224 of the measuring portion 201m in the middle. A thermal flow rate sensor 208 for measuring the flow rate is disposed on the branch path of the sub-passage 234.

Note that the physical quantity measurement device 20 can have a configuration in which a thermometer, a hygrometer, and a pressure gauge (not illustrated) are mounted as elements for measuring the physical quantity of the intake air in addition to the thermal flow rate sensor 208 and are connected to the connector terminals 301 by wire bonding.

Next, a characteristic configuration of the present embodiment will be described in detail.

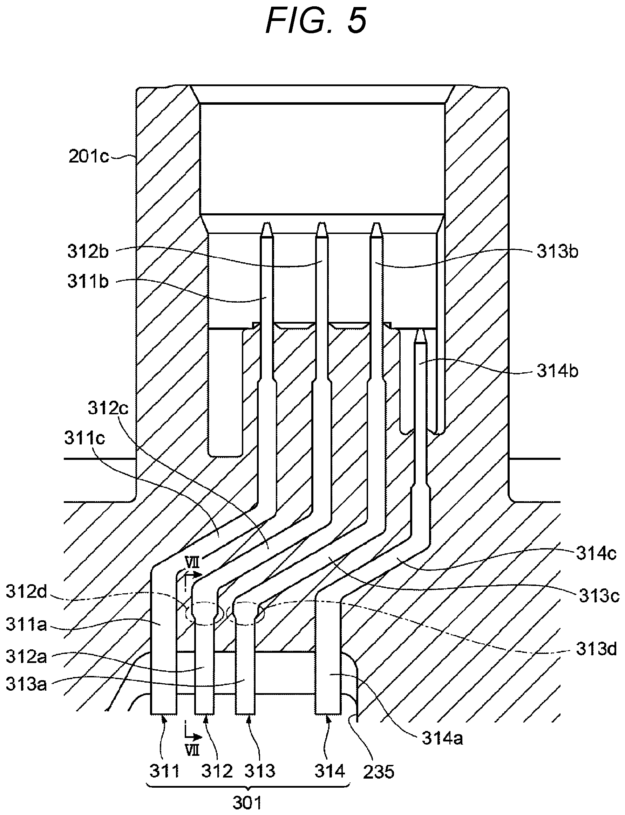

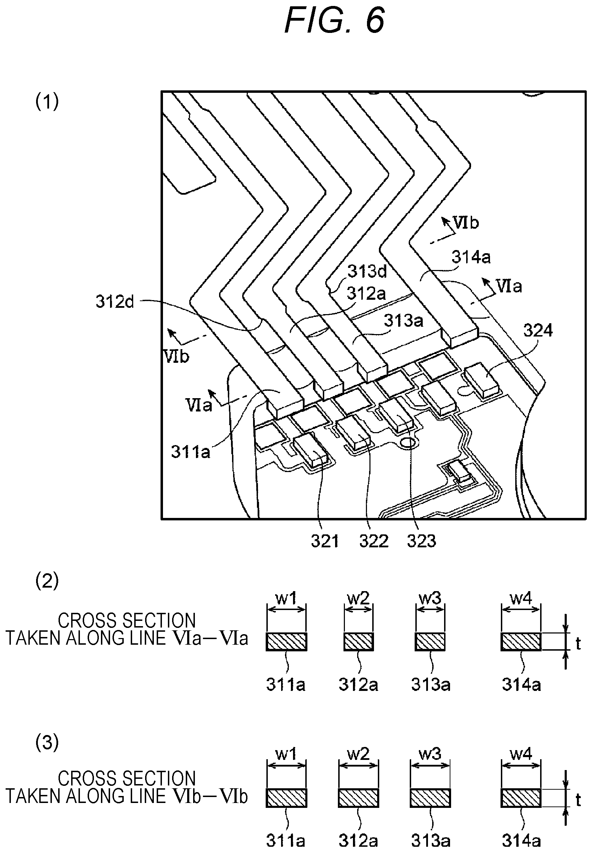

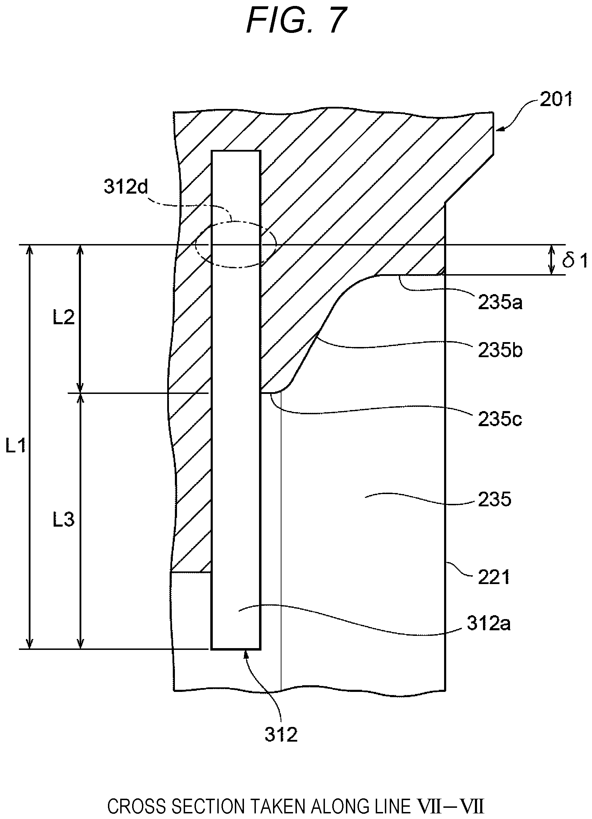

FIG. 5 is a cross-sectional view of a part of the physical quantity measurement device taken along the connector terminal. FIG. 6 is a view illustrating a cross section of the connector terminal. FIG. 7 is a view for describing a relationship between the shape of the side wall surface of the circuit chamber and the shape of the connector terminal.

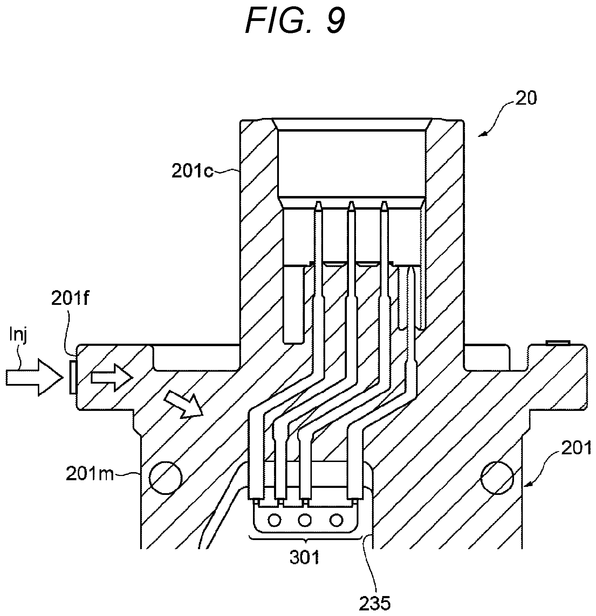

The connector terminal 301 is formed by three or more conductor pieces, and includes four connector terminals 311, 312, 313, and 314 in the present embodiment. These connector terminals 311 to 314 are insert-molded in the housing 201 to be arranged in parallel at a predetermined interval. The respective connector terminals 311 to 314 are formed in a state where the distal end portions thereof are connected to each other by punching one metal plate (see FIG. 9), and are separated separately after being insert-molded in the housing 201.

The respective connector terminals 311 to 314 have proximal end portions 311b to 314b protruding and exposed into the connector 201c and distal end portions 311a to 314a protruding and exposed into the circuit chamber 235. The proximal end portions 311b to 314b are connected to a harness in the connector 201c. The distal end portions 311a to 314a are electrically connected to the circuit board 207 mounted inside the housing.

As illustrated in FIG. 5, the distal end portions 311a to 314a and the proximal end portions 311b to 314b linearly extend along an extending direction of the measuring portion 201m at positions shifted in a lateral width direction connecting the side wall surface 223 side and the side wall surface 224 side of the measuring portion 201m, and are continuous with each other by continuous portions 311c to 314c that are obliquely bent with respect to the distal end portions 311a to 314a and the proximal end portions 311b to 314b.

As illustrated in FIGS. 5 and 6, the respective connector terminals 311 to 314 are configured such that the connector terminals 312 and 313 disposed between the connector terminals 311 and 314 have smaller cross-sectional areas of the distal end portions 312a and 313a than the connector terminals 311 and 314 both sides. That is, in a case where the distal end portions 311a and 314a of the connector terminals (both-side connector terminals) 311 and 314 on both sides are compared with the distal end portions 312a and 313a of the connector terminals (intermediate connector terminals) 312 and 313 disposed therebetween, the distal end portions 312a and 313a of the connector terminals 312 and 313 have smaller cross-sectional areas.

In the present embodiment, since each of the connector terminals 311 to 314 is formed by punching one metal plate, the connector terminals 311 to 314 have the same thickness t, and as illustrated in FIG. 6(2), the lateral widths w2 and w3 of the distal end portions 312a and 313a of the connector terminals 312 and 313 are narrower than the lateral widths w1 and w4 of the distal end portions 311a and 314a of the connector terminals 311 and 314.

As illustrated in FIG. 6, the distal end portions 312a and 313a of the connector terminals 312 and 313 are provided with throttle portions 312d and 313d, respectively, in which the lateral widths w2 and w3 are narrower on the distal end side than on the proximal end side, and the cross-sectional area is reduced. The throttle portions 312d and 313d are provided at positions buried in the measuring portion 201m by a predetermined length from the portions exposed to the circuit chamber 235 toward the proximal end sides of the connector terminals 312 and 313 with respect to the side wall surfaces 235a to 235c of the circuit chamber 235.

In the distal end portions 312a and 313a of the connector terminals 312 and 313, the cross-sectional area of the portions located on the proximal end side of the connector terminals 312 and 313 with respect to the throttle portions 312d and 313d is the same as the cross-sectional area of the distal end portions 311a and 314a located at both ends in the arrangement direction. That is, as illustrated in FIG. 6(3), in the distal end portions 312a and 313a of the connector terminals 312 and 313, the lateral widths on the proximal end sides with respect to the throttle portions 312d and 313d are the same as the lateral widths of the distal end portions 311a and 314a of the connector terminals 311 and 314 (w1=w2=w3=w4), and the cross-sectional areas are also the same. Then, as illustrated in FIG. 6(2), the laterals width on the distal end side with respect to the throttle portions 312d and 313d are narrower (w2, w3 < w1, w4) than the lateral width of the distal end portions 311a and 314a of the connector terminals 311 and 314, and the cross-sectional areas are also smaller.

As illustrated in FIG. 7, the circuit chamber 235 has a first side wall surface 235a that vertically falls from the front surface 221 of the housing 201 toward the back surface side, a second side wall surface 235b that is inclined to gradually shift toward the center of the circuit chamber 235 as shifting toward the back surface side of the housing portion 201 continuously to the lower end of the first side wall surface 235a, and a third side wall surface 235c that is continuous to the lower end of the second side wall surface 235b and falls toward the back surface side of the housing 201 at an angle perpendicular to the front surface 221. These side wall surfaces are provided to be continuous over the entire circumference of the circuit chamber 235. The second side wall surface 235b constitutes an inclined surface that is inclined in a direction shifting along the distal end portions 312a and 313a as shifting in a direction approaching the distal end portions 312a and 313a from the front surface 221 of the measuring portion 201m.

The specific dimensions of the second side wall surface 235b in the present embodiment are as follows: the protrusion amount from the first side wall surface 235a to the third side wall surface 235c is 1.50 mm, the height from the lower end of the first side wall surface 235a to the upper end of the third side wall surface 235c is 1.58 mm, and the inclination angle of the distal end portion 311a with respect to the exposed surface is 62° [deg].

The proximal end of the second side wall surface 235b is disposed at a position corresponding to the throttle portions 312d and 313d of the connector terminals 312 and 313. That is, the throttle portions 312d and 313d of the connector terminals 312 and 313 are disposed at substantially the same positions as the first side wall surface 235a of the circuit chamber 235. More specifically, the throttle portions 312d and 313d are disposed at positions buried in the side wall surface of the circuit chamber 235 by δ1 with respect to the first side wall surface 235a of the circuit chamber 235, that is, at positions entering into a mold resin portion constituting the measuring portion 201m of the housing 201. The distal end portions 312a and 313a of the connector terminals 312 and 313 have a length L1 from the throttle portions 312d and 313d to the distal end, and a portion having a length L3 protrudes from the third side wall surface 235c of the circuit chamber 235 and is exposed to the inside of the circuit chamber 235 (see FIG. 4).

Then, a portion having a length L2 is in a state of being buried in the mold resin portion of the measuring portion 201m with respect to the third side wall surface 235c. The portion having the length L2 is covered with the inclined second side wall surface 235b, and the thickness covered with the mold resin portion of the measuring portion 201m becomes thinner as the portion shifts to the distal end side. A specific dimension of the length L2 in the present embodiment is 1.90 **mm.**

The physical quantity measurement device 20 has a configuration in which the cross-sectional areas of the distal end portions 312a and 313a of the intermediate connector terminals 312 and 313 disposed between the connector terminals 311 and 314 are smaller than the cross-sectional areas of the distal end portions 311a and 314a of the connector terminals 311 and 314 on both sides. Thus, it is possible to reduce the thermal stress generated at the interface between the connector terminals 312 and 313 and the sealing material 211 due to the temperature change of the device, and it is possible to reduce the maximum main stress acting on the sealing material 211 from the connector terminals 312 and 313. As a result, it is possible to suppress peeling of the sealing material 211 from the housing 201, and it is possible to prevent disconnection of the wire material 303 such as a bonding wire due to peeling of the sealing material 211.

In addition, the distal end portions 312a and 313a of the intermediate connector terminals 312 and 313 have a small cross-sectional area not only at the portion that has the length L3 and is exposed to the inside of the circuit chamber 235 but also at the portion that has the length L2 and is buried in the side wall surface of the circuit chamber 235. Thus, it is possible to also reduce the thermal stress generated at the interface between the connector terminals 312 and 313 and the housing 201 due to the temperature change of the device.

Then, the physical quantity measurement device 20 in the present embodiment has a configuration in which the inclined second side wall surface 235b is provided on the side wall surface of circuit chamber 235. Then, the throttle portions 312d and 313d of the connector terminals 312 and 313 are disposed at positions substantially equal to boundary portions between the first side wall surface 235a and the second side wall surface 235b, and are buried in the side wall surface of the circuit chamber 235 by the length L2.

With the inclined second side wall surface 235b, the thickness of the mold resin portion of the measuring portion 201m covering the portion having the length L2 in the distal end portions 312a and 313a becomes thinner as it shifts to the distal end. Thus, it is possible to reduce the maximum main stress acting on the interface between the side wall surface of the circuit chamber 235 and the sealing material 211, and it is possible to further suppress peeling of the sealing material 211 from the housing 201.

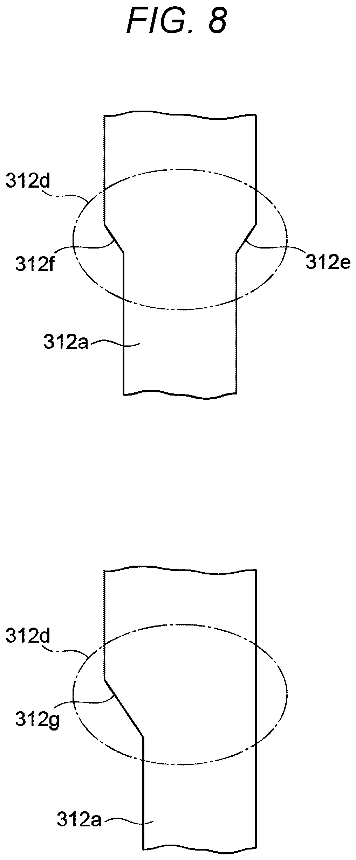

Then, in the physical quantity measurement device 20 in the present embodiment, for example, as illustrated in FIG. 8(1), the throttle portion 312d has a pair of tapered inclined surfaces 312f and 312e to narrow both sides of the distal end portion 312a in the width direction. Thus, it is possible to prevent concentration of stress on the throttle portion 312d as compared with the case of a right angle stair shape, and it is possible to improve the durability of the resin around the connector terminals 312 and 313. In addition, as illustrated in FIG. 8(2), a configuration in which one tapered inclined surface 312 g is provided to narrow only one side of the distal end portion 312a in the width direction may be made.

FIG. 9 is a view illustrating the injection direction of the mold resin in injection molding.

When the connector terminal 301 is insert-molded in the housing 201, as indicated by an arrow Inj in the drawing, mold resin is injected into a cavity from a gate portion of a mold corresponding to the end surface of the flange 201f, and the mold resin flows into the mold from a direction perpendicular to the extending direction of the connector terminal 301.

The connector terminal 301 has a configuration in which the cross-sectional areas of the distal end portions 311a and 314a of the connector terminals 311 and 314 on both sides are larger than the cross-sectional areas of the distal end portions 312a and 313a of the intermediate connector terminals 312 and 313 disposed between the connector terminals 311 and 314. Thus, it is possible to secure the strength against resin flow stress during insert molding, and it is possible to prevent an occurrence of a situation in which the connector terminal 301 is deformed by the flow of the mold resin and thus the adjacent connector terminals come into contact with each other.

In the above embodiment, the case where the connector terminals 311 and 314 have the same cross-sectional area has been described as an example. However, a configuration in which the cross-sectional area of the connector terminal 314 far away from the gate portion is smaller than the cross-sectional area of the connector terminal 311 close to the gate portion may be made. That is, the connector terminal 311 disposed on the upstream side in the injection direction of the mold resin for molding the housing 20 may have a larger cross-sectional area of the distal end portion than the connector terminal 314 disposed on the downstream side in the flow direction. As a result, it is possible to further largely secure the strength against resin flow stress during insert molding, and it is possible to prevent the occurrence of a situation in which the connector terminal 301 is deformed by the flow of the mold resin and thus the adjacent connector terminals come into contact with each other.

Although the embodiment of the present invention has been described in detail above, the present invention is not limited to the above embodiment, and various design changes can be made without departing from the gist of the present invention described in the claims. For example, the above-described embodiment has been described in detail for easy understanding of the present invention, and is not necessarily limited to those having all the described configurations. In addition, a part of the configuration of a certain embodiment can be replaced with the configuration of another embodiment, and the configuration of another embodiment can be added to the configuration of a certain embodiment. Furthermore, a part of the configuration of each embodiment can be added, deleted, and replaced to, from, and with other configurations.

### Reference Signs List

20 physical quantity measurement device (electrical circuit device)
201 housing
201m measuring portion
207 circuit board
211 sealing material
221 front surface
235 circuit chamber
301, 311, 312, 313, 314 connector terminal (conductor piece)
311a, 312a, 313a, 314a distal end portion
302 terminal block
321, 322, 323, 324 bonding pad

## Claims

1. An electrical circuit device comprising:
a housing in which a circuit chamber is opened on a front surface;
three or more conductor pieces that are insert-molded in the housing and has distal end portions arranged to be exposed to the circuit chamber;
a circuit board accommodated in the circuit chamber;
a wire material that connects the three or more conductor pieces and the circuit board; and
a sealing material with which the circuit chamber is filled,
wherein, in the three or more conductor pieces, at least one distal end portion located in the middle has a smaller cross-sectional area than distal end portions located at both ends in an arrangement direction.

2. The electrical circuit device according to claim **1,** wherein the at least one distal end portion located in the middle is provided with a throttle portion that reduces the cross-sectional area at a position buried in the housing by a predetermined length from a portion exposed to the circuit chamber toward a proximal end side of a side wall surface of the circuit chamber.

3. The electrical circuit device according to claim 2, wherein a cross-sectional area of a portion of the at least one distal end portion located in the middle, the portion being located closer to the proximal end side than the throttle portion, is the same as a cross-sectional area of the distal end portions located at both the ends in the arrangement direction.

4. The electrical circuit device according to claim 1, wherein a side wall surface of the circuit chamber has an inclined surface that is inclined in a direction shifting along the distal end portion as shifting in a direction approaching the distal end portion from the front surface of the housing.

5. The electrical circuit device according to claim 4, wherein a proximal end of the inclined surface is disposed at a position corresponding to the throttle portion.

6. The electrical circuit device according to claim 1, wherein the sealing material is formed of a thermosetting adhesive.

7. The electrical circuit device according to claim 1, wherein the sealing material is formed of an epoxy adhesive.

8. The electrical circuit device according to claim 1, wherein, among the three or more conductor pieces, the conductor piece disposed on an upstream side in an injection direction of a mold resin for molding the housing has a larger cross-sectional area of a distal end portion than the conductor piece disposed on a downstream side in a flow direction.
